# EUROPÄISCHE PATENTSCHRIFT

(11) **EP 4 371 857 B1**
(45) Veröffentlichungstag und Bekanntmachung des Hinweises auf die Patenterteilung: **04.06.2025**
(21) Anmeldenummer: 23206910.4
(22) Anmeldetag: 31.10.2023
(51) Int. Cl.: B62D 25/02, B62D 27/02

(54) **KRAFTFAHRZEUGBAUTEIL UMFASSEND ZWEI PROFILE**
MOTOR VEHICLE COMPONENT COMPRISING TWO PROFILES
COMPOSANT DE VÉHICULE AUTOMOBILE COMPRENANT DEUX PROFILÉS

(30) Priorität: 21.11.2022 DE 102022212400
(43) Veröffentlichungstag der Anmeldung: 22.05.2024
(73) Patentinhaber: MAGNA STEYR Fahrzeugtechnik GmbH & Co KG, 8041 Graz (AT)
(72) Erfinder: ERLACHER, Manuel, 9545 Radenthein (AT); MOKINA, Thomas, 8054 Seiersberg (AT); SULCOVÁ, Olga, 8054 Graz (AT)
(74) Vertreter: Zangger, Bernd

(56) Entgegenhaltungen:
- EP-A1- 3 360 761
- DE-A1- 102013 113 869
- DE-A1- 102018 127 368
- DE-A1- 102021 004 896

## Beschreibung

### Gebiet der Erfindung

Die vorliegende Erfindung betrifft ein Kraftfahrzeugbauteil, insbesondere einen Schweller oder einen Kraftfahrzeugboden, umfassend ein erstes Profil und ein zweites Profil. Die Erfindung betrifft auch ein Verfahren zur Herstellung eines solchen Kraftfahrzeugbauteils.

### Stand der Technik

Es ist bekannt, dass manche Kraftfahrzeugbauteile aus mehreren, oft großen Profilen zusammengebaut werden, insbesondere können beispielsweise die Schweller eines Kraftfahrzeugs aus zwei oder mehr sich in Fahrzeuglängsrichtung erstreckenden Hohlprofilen gebildet sein. Derartige Profile können großflächig an Klebeflächen miteinander verklebt sein, also große Kontaktflächen zueinander aufweisen, an denen sie miteinander verklebt sind. Ein solches Kraftfahrzeugbauteil kann insbesondere ein mehrteiliger Schweller sein, der aus mehreren Strangpressprofilen zusammengesetzt sein kann.

Das Dokument DE 10 2018 127368 A1 offenbart einen Seitenschweller mit einem ersten Profil und einem zweiten Profil nach dem Oberbegriff des Anspruchs 1.

Derartige großflächige Verklebungen sind nicht prozesssicher herstellbar. Durch nicht gleichmäßige Verteilung des Klebstoffes können nicht vernetzte Bereiche, zum Beispiel durch Lufteinschlüsse, gebildet werden. Die Eigenschaften der gebildeten Verklebungen stimmen dann nicht mit den Eigenschaften überein, die mittels eines Simulationsprogramms ermittelt werden können. Dadurch können die Ergebnisse einer Betriebsfestigkeits- und Crash-Simulationen besser als in der Realität ausfallen - die hergestellten Kraftfahrzeugbauteile weisen tatsächlich schlechtere Festigkeitseigenschaften auf, als geplant.

### Zusammenfassung der Erfindung

Es ist eine Aufgabe der Erfindung, ein Kraftfahrzeugbauteil, insbesondere einen Schweller eines Kraftfahrzeugs, anzugeben, dessen Betriebsfestigkeits- und Crash-Verhalten besser vorherbestimmbar ist. Eine weitere Aufgabe der Erfindung ist es, ein einfaches Verfahren zur Herstellung eines solchen Kraftfahrzeugbauteils anzugeben, dessen Betriebsfestigkeits- und Crash-Verhalten besser vorherbestimmbar ist.

Die Lösung der Aufgabe erfolgt durch ein Kraftfahrzeugbauteil, insbesondere einen Schweller oder einen Kraftfahrzeugboden, umfassend ein erstes Profil und ein zweites Profil, wobei das erste Profil und das zweite Profil jeweils eine Klebefläche aufweisen, wobei das erste und das zweite Profil an deren Klebeflächen durch einen Klebstoff miteinander verklebt sind, wobei die Klebefläche des ersten Profils und/oder die Klebefläche des zweiten Profils zumindest eine Nut aufweist, wobei der Klebstoff die jeweilige Klebefläche in denjenigen Bereichen, in welchen keine Nut ausgebildet ist, vollständig bedeckt und in denjenigen Bereichen, in welchen eine Nut ausgebildet ist, nicht bedeckt.

Erfindungsgemäß weist somit zumindest eine der beiden Klebeflächen der zu verbindenden Profile zumindest eine Nut auf, also eine Vertiefung, mit beispielsweise geraden oder gebogenen seitlichen Begrenzungen, mit Ecken oder abgerundeten Ecken an den Rändern, wobei die Vertiefung nach innen, vom Verbindungspartner weg, ausgerichtet ist. Wenn die beiden Klebeflächen der Profile gegeneinander gedrückt werden, um die Verklebung herzustellen, bildet sich lediglich in denjenigen Bereichen tatsächlich eine Verklebung aus, die nicht in einer Nut, also Vertiefung, liegen. Da die, an sich großen Klebeflächen durch die Nut oder durch die Nuten in mehrere kleinere Klebeflächen geteilt wird, werden die bei großen Klebeflächen auftretenden Probleme, wie Lufteinschlüsse, vermieden.

Die Klebeflächen und Freiräume zwischen den Klebeflächen werden so ausgelegt, dass eine Vernetzung der definierten tatsächlichen Klebeflächen, zwischen den Nuten, reproduzierbar gewährleistet wird und dadurch auch Betriebsfestigkeits- und Crashsimulationen akkurat abgebildet werden können.

Die Klebefläche des ersten und/oder zweiten Profils ist insgesamt groß ausgebildet, so dass es zu einer großflächigen Verklebung kommt. Eine derart große Klebefläche erstreckt sich bevorzugt über zumindest 20 Prozent, besonders bevorzugt zumindest 50 Prozent, insbesondere zumindest 70 Prozent der Länge eines Kraftfahrzeugs und/oder über zumindest 20 Prozent, besonders bevorzugt zumindest 50 Prozent, insbesondere zumindest 70 Prozent der Höhe des Kraftfahrzeugbauteils, insbesondere der Höhe des Schwellers. Dabei beziehen sich Längen- und Höhenangaben auf eine Einbaulage des Kraftfahrzeugbauteils in einem Kraftfahrzeug und die Fahrzeugkoordinaten, also Längen- und Höhendimension des Kraftfahrzeugs (x- und z-Richtung).

Bevorzugt ist die Klebefläche - abgesehen von den Nuten - eben ausgebildet. Bevorzugt weist auch die Nut oder die Nuten einen Boden auf, der eben ist und der besonders bevorzugt parallel zur Klebefläche liegt.

Die Klebefläche kann eine Begrenzungsfläche einer Fläche, also eines flächigen Teils des Profils sein.

In denjenigen Bereichen, in welchen eine Nut ausgebildet ist, wird die Klebefläche nicht vom Klebstoff bedeckt. Bevorzugt ist im Wesentlichen kein Klebstoff in einer Nut vorhanden. Insbesondere an den Rändern einer Nut kann sich jedoch überschüssiger Klebstoff befinden, der nicht Wesentlich zur Verklebung der beiden Profile beiträgt. Jedenfalls erfolgt eine Verklebung der beiden Profile in den Zwischenbereichen, in welchen keine Nut ausgebildet ist und nicht in den Bereichen der Klebefläche, in denen eine Nut ausgebildet ist. Durch die Verklebung sind die beiden Profile aneinander gefügt. Ein weiteres Befestigungsmittel zum Fügen der beiden Profile, wie beispielsweise eine Verschraubung oder Stanznieten, ist bevorzugt nicht vorgesehen, kann aber für ein schnelleres Handling der gefügten Bauteile bei der Montage von Vorteil sein.

Vorzugsweise weist die Klebefläche des ersten Profils und/oder die Klebefläche des zweiten Profils zumindest zwei Nuten, bevorzugt mehr als zwei Nuten, auf, wobei der Klebstoff die jeweilige Klebefläche in denjenigen Bereichen, in welchen keine Nut ausgebildet ist, vollständig bedeckt und in denjenigen Bereichen, in welchen eine Nut ausgebildet ist, nicht bedeckt, wobei bevorzugt alle Nuten des ersten und/oder alle Nuten des zweiten Profils parallel zueinander ausgerichtet sind.

Eine einzelne Nut kann beispielsweise etwa gleich hoch sein (in Fahrzeugz-Richtung), wie der zur Verklebung verwendete Zwischenbereich der Klebefläche zwischen zwei Nuten, oder zwischen 1 und 90 Prozent der Höhe dieses Zwischenbereichs, bevorzugt zwischen 5 und 70 Prozent, besonders bevorzugt zwischen 10 und 60 Prozent. Die Höhe einer Nut in Fahrzeug-z-Richtung kann beispielsweise 0,2 - 10 Zentimeter betragen, bevorzugt 0,5 - 5 Zentimeter. Die Tiefe einer Nut kann beispielsweise 1 - 10 Millimeter betragen, bevorzugt 2 - 7 Millimeter.

Die Nut oder Nuten verlaufen bevorzugt in einer Längsrichtung des Kraftfahrzeugbauteils, insbesondere in einer Längsrichtung des Schwellers.

Bevorzugt weist die Klebefläche des ersten Profils und die Klebefläche des zweiten Profils zumindest zwei Nuten, bevorzugt mehr als zwei Nuten, auf, wobei die Nuten des ersten Profils jeweils den Nuten des zweiten Profils gegenüberliegend angeordnet sind. Somit sind auch die Zwischenbereiche, die die Verklebungen der Klebefläche ausbilden, einander gegenüberliegend angeordnet.

Gemäß einer Ausführungsform stellen die Nuten der Klebeflächen des ersten und/oder des zweiten Profils jeweils eine U-Form einer Fläche des Profils, die die jeweilige Klebefläche ausbildet, dar, so dass die Fläche an der, der Klebefläche gegenüberliegenden Seite, im Bereich einer Nut jeweils eine Erhebung von der Klebefläche weg aufweist.

Bevorzugt ist das erste Profil und/oder das zweite Profil durch einen kontinuierlichen Herstellungsprozess hergestellt, insbesondere durch Strangpressen.

Bevorzugt ist das erste Profil und/oder das zweite Profil ein Hohlprofil.

Ein Verfahren zur Herstellung eines Kraftfahrzeugbauteils wie zuvor beschrieben kann vorsehen, dass das erste Profil und das zweite Profil separat voneinander bereitgestellt werden, wobei die Klebefläche des ersten Profils und/oder die Klebefläche des zweiten Profils zumindest eine Nut, bevorzugt mehrere Nuten, aufweist, dass danach Klebstoff auf die Klebefläche des ersten Profils und/oder auf die Klebefläche des zweiten Profils aufgebracht wird, dass danach das erste Profil und das zweite Profil gegeneinander gedrückt werden, wobei der Klebstoff die jeweilige Klebefläche des ersten und zweiten Profils in denjenigen Bereichen, in welchen keine Nut ausgebildet ist, vollständig bedeckt und in denjenigen Bereichen, in welchen eine Nut ausgebildet ist, nicht bedeckt. Beim Gegeneinanderdrücken der beiden Profile können diese miteinander verklebt und somit gefügt werden. Die Nut oder Nuten verlaufen bevorzugt in Längsrichtung des Kraftfahrzeugbauteils, insbesondere des Schwellers oder Kraftfahrzeugbodens. Der Klebstoff kann - insbesondere in Form von Kleberaupen - bevorzugt ebenfalls in Längsrichtung des Kraftfahrzeugbauteils auf die Klebefläche des ersten Profils und/oder auf die Klebefläche des zweiten Profils aufgebracht werden, besonders bevorzugt jeweils auf die Zwischenbereiche der Klebefläche, in welchen keine Nut ausgebildet ist. Die Nut oder Nuten sind zumindest großteils nicht mit Klebstoff bedeckt, so dass es in den Nuten, also in den Vertiefungen, zu keiner Verklebung kommt.

Die Nuten können beispielsweise beim Strangpressen, durch Umformen oder durch Fräsen hergestellt sein.

### Kurzbeschreibung der Zeichnungen

Die Erfindung wird im Folgenden beispielhaft unter Bezugnahme auf die Zeichnungen beschrieben.
- Fig. 1 a,b,c: ist eine schematische Darstellung von Verfahrensschritten bei der Herstellung eines nicht erfindungsgemäßen Kraftfahrzeugbauteils.
- Fig. 2: ist eine schematische Darstellung eines Profils für ein erfindungsgemäßes Kraftfahrzeugbauteil.
- Fig. 3: ist eine schematische Darstellung eines erfindungsgemäßen Kraftfahrzeugbauteils.
- Fig. 4: ist eine schematische Darstellung eines weiteren erfindungsgemäßen Kraftfahrzeugbauteils.
- Fig. 5: ist eine schematische Darstellung eines nicht erfindungsgemäßen Kraftfahrzeugbauteils (links), und eines entsprechenden erfindungsgemäßen Kraftfahrzeugbauteils in einer ersten Variante (mitte) und eines entsprechenden erfindungsgemäßen Kraftfahrzeugbauteils in einer zweiten Variante (rechts).
- Fig. 6: ist eine dreidimensionale Darstellung eines weiteren erfindungsgemäßen Kraftfahrzeugbauteils, nämlich eines Schwellers eines Kraftfahrzeugs.

### Detaillierte Beschreibung der Erfindung

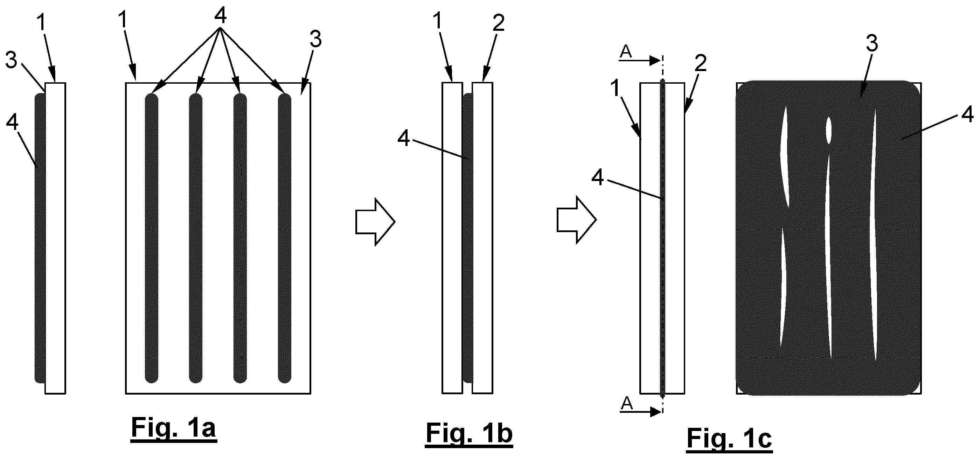

In Fig. 1 a,b,c sind Schritte eines Verfahrens zur Herstellung eines nicht erfindungsgemäßen Kraftfahrzeugbauteils dargestellt, um das Problem einer dabei verwendeten großflächigen Verklebung aufzuzeigen.

Wie in Fig. 1a gezeigt, wird zunächst ein erstes Profil 1, dass hier als Flachbauteil ausgeführt ist, einseitig an einer Klebefläche 3 mit einem Klebstoff 4 versehen. In Fig. 1a links ist das Bauteil von der Seite, in der Fig. 1a rechts von vorne dargestellt. In der rechten Darstellung der Fig. 1a ist zu erkennen, dass der Klebstoff 4 in Form von Kleberaupen auf die Klebefläche 3 aufgebracht wird.

Wie in Fig. 1b dargestellt, wird ein zweites Profil 2 an das erste Profil 1 herangeführt. Fig. 1c zeigt links, von der Seite dargestellt, dass das erste Profil 1 mit dem zweiten Profil 2 verpresst ist. Die Abbildung rechts in der Fig. 1c zeigt einen Schnitt A-A, gemäß der linken Abbildung der Fig. 1c. Der Klebstoff 4 ist somit nach erfolgter Pressung dargestellt. Durch das Verpressen der zwei Bauteile 1, 2, bis zu einem definierten Klebespalt, können zwischen den Kleberaupen Lufteinschlüsse entstehen, die in Fig. 1c rechts als weiße Flächen innerhalb des Klebstoffs 4 zu sehen sind.

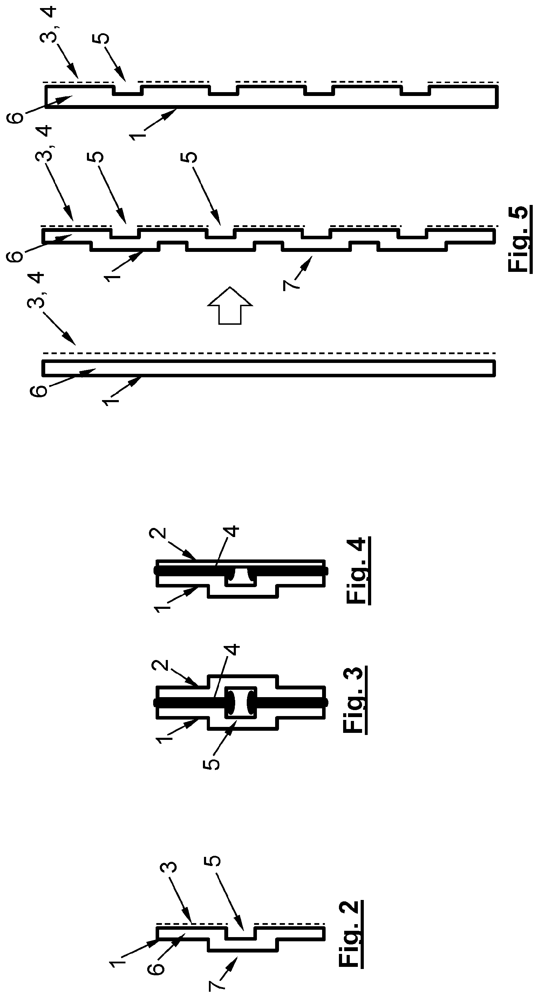

Fig. 2 ist eine schematische Darstellung eines einfachen ersten Profils 1 für ein erfindungsgemäßes Kraftfahrzeugbauteil. Das erste Profil ist als Flacherzeugnis, zum Beispiel als Blech, ausgebildet. Es besteht daher nur aus einer Fläche 6. Eine Oberfläche der Fläche 6 bildet die Klebefläche 3. An dieser Seite der Fläche 6 befindet sich eine nach innen weisende Nut 5 in der Fläche 6 und somit in der Klebefläche 3. Die Nut 5 ist durch eine U-förmige Umformung oder Pressung der Fläche 6 gebildet, so dass auf der gegenüberliegenden Seite der Fläche 6 eine Erhebung 7 ausgebildet ist. Die Klebefläche 3 kann mit Klebstoff 4 bedeckt werden.

Fig. 3 und Fig. 4 zeigen ein erstes Profil gemäß Fig. 2 in einem Zustand, in dem das erste Profil 1 mit einem zweiten Profil 2 verklebt ist, wobei das zweite Profil 2 ebenfalls eine Nut 5 aufweisen kann, die der Nut 5 des ersten Profils 1 gegenüberliegt (Fig. 3), oder das zweite Profil 2 auch flach ausgebildet sein kann, zum Beispiel als ebenes Blech (Fig. 4). Jeweils ist die Nut 5 des ersten Profils 1 und gegebenenfalls des zweiten Profils 2 nicht mit Klebstoff 4 bedeckt, die übrigen Abschnitte der Klebeflächen sind mit dem Klebstoff 4 bedeckt.

Fig. 5 zeigt schematisch, wie ein erstes Profil 1 eines nicht erfindungsgemäßen Kraftfahrzeugbauteils (links) durch ein entsprechendes erstes Profil 1 eines erfindungsgemäßen Kraftfahrzeugbauteils (mitte und rechts in Fig. 5) ersetzt werden kann. In einer Hochrichtung eines Kraftfahrzeuges, in dem das erste Profil 1 verbaut werden soll, weist das erste Profil 1 mehrere Nuten 5 auf, die durch Pressen oder Umformen der Fläche 6 des ersten Profils 1 erzeugt sein können. In den Zwischenräumen zwischen den Nuten 5 befindet sich Klebstoff 4 an der Klebefläche 3. Auf der den Nuten 5 gegenüberliegenden Seite der Fläche 6 weist diese Erhebungen 7 auf (mitte) oder ist flach ausgebildet (rechts).

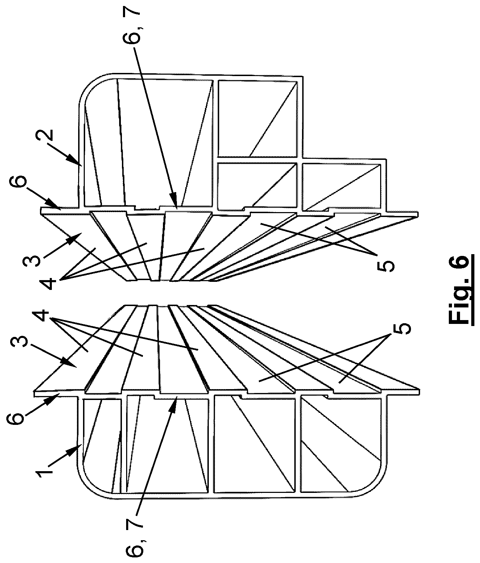

Fig. 6 ist eine dreidimensionale Darstellung eines weiteren erfindungsgemäßen Kraftfahrzeugbauteils, nämlich eines Schwellers eines Kraftfahrzeugs. Das erste Profil 1 ist ein Hohlprofil, das eine Außenseite des Schwellers bildet und das zweite Profil 2 ist ebenfalls ein Hohlprofil und bildet die Innenseite des Fahrzeugschwellers. Erstes und zweites Profil 1, 2 sind als Strangpressprofile ausgebildet.

Das erste Profil 1 und das zweite Profil 2 weisen jeweils eine Klebefläche 3 auf, wobei das erste und das zweite Profil 1, 2 an deren Klebeflächen 3 durch einen Klebstoff 4 miteinander verklebt werden können.

Die Klebefläche 3 des ersten Profils 1 und die Klebefläche 3 des zweiten Profils 2 weist in vertikaler Richtung mehrere horizontal verlaufende Nuten 5 auf, wobei der Klebstoff 4 die jeweilige Klebefläche 3 in denjenigen Bereichen, in welchen keine Nut 5 ausgebildet ist, vollständig bedeckt und in denjenigen Bereichen, in welchen eine Nut 5 ausgebildet ist, zumindest im Wesentlichen oder gänzlich nicht bedeckt. Die Verklebung zwischen erstem Profil 1 und zweitem Profil 2 erfolgt somit nur in den Zwischenbereichen der Klebefläche 3, in welchen keine Nuten 5 ausgebildet sind.

Die Nuten 5 des ersten Profils 1 und die Nuten 5 des zweiten Profils 2 sind parallel zueinander ausgerichtet und liegen jeweils einander gegenüber.

Die Nuten 5 der Klebeflächen 3 des ersten und des zweiten Profils 1, 2 sind jeweils als U-förmige Umformung einer Fläche 6 des jeweiligen Hohlprofils 1, 2 gebildet. Diese Fläche 6 weist somit an der, der Klebefläche 3 gegenüberliegenden Seite, im Bereich der Nuten 5 Erhebungen 7 auf, die von der Klebefläche 3 wegweisen.

### Bezugszeichenliste

- 1: erstes Profil
- 2: zweites Profil
- 3: Klebefläche
- 4: Klebstoff
- 5: Nut
- 6: Fläche
- 7: Erhebung

## Patentansprüche

1. Kraftfahrzeugbauteil, insbesondere Schweller, umfassend ein erstes Profil (1) und ein zweites Profil (2), wobei das erste Profil (1) und das zweite Profil (2) jeweils eine Klebefläche (3) aufweisen, wobei das erste und das zweite Profil (1, 2) an deren Klebeflächen (3) durch einen Klebstoff (4) miteinander verklebt sind,
**dadurch gekennzeichnet, dass** die Klebefläche (3) des ersten Profils (1) und/oder die Klebefläche (3) des zweiten Profils (2) zumindest eine Nut (5) aufweist, wobei der Klebstoff (4) die jeweilige Klebefläche (3) in denjenigen Bereichen, in welchen keine Nut (5) ausgebildet ist, vollständig bedeckt und in denjenigen Bereichen, in welchen eine Nut (5) ausgebildet ist, nicht bedeckt.

2. Kraftfahrzeugbauteil nach Anspruch 1,
**dadurch gekennzeichnet, dass** die Klebefläche (3) des ersten Profils (1) und/oder die Klebefläche (3) des zweiten Profils (2) zumindest zwei Nuten (5), bevorzugt mehr als zwei Nuten (5), aufweist, wobei der Klebstoff (4) die jeweilige Klebefläche (3) in denjenigen Bereichen, in welchen keine Nut (5) ausgebildet ist, vollständig bedeckt und in denjenigen Bereichen, in welchen eine Nut (5) ausgebildet ist, nicht bedeckt, wobei bevorzugt alle Nuten (5) des ersten Profils (1) und/oder alle Nuten (5) des zweiten Profils (2) parallel zueinander ausgerichtet sind.

3. Kraftfahrzeugbauteil nach Anspruch 2,
**dadurch gekennzeichnet, dass** die Nuten (5) des ersten Profils (1) jeweils den Nuten (5) des zweiten Profils (2) gegenüberliegend angeordnet sind.

4. Kraftfahrzeugbauteil nach zumindest einem der vorhergehenden Ansprüche,
**dadurch gekennzeichnet, dass** die Nuten (5) der Klebeflächen (3) des ersten und/oder des zweiten Profils (1, 2) jeweils eine U-Form einer Fläche (6) des Profils (1, 2), die die jeweilige Klebefläche (3) ausbildet, darstellen, so dass die Fläche (6) an der, der Klebefläche (3) gegenüberliegenden Seite, im Bereich einer Nut (5) jeweils eine Erhebung (7) von der Klebefläche (3) weg aufweist.

5. Kraftfahrzeugbauteil nach zumindest einem der vorhergehenden Ansprüche,
**dadurch gekennzeichnet, dass** das erste Profil (1) und/oder das zweite Profil (2) durch einen kontinuierlichen Herstellungsprozess hergestellt ist, insbesondere durch Strangpressen.

6. Verfahren zur Herstellung eines Kraftfahrzeugbauteils nach zumindest einem der vorhergehenden Ansprüche,
**dadurch gekennzeichnet, dass** das erste Profil (1) und das zweite Profil (2) separat voneinander bereitgestellt werden, wobei die Klebefläche (3) des ersten Profils (1) und/oder die Klebefläche (3) des zweiten Profils (2) zumindest eine Nut (5), bevorzugt mehrere Nuten (5), aufweist, dass danach Klebstoff (4) auf die Klebefläche (3) des ersten Profils (1) und/oder auf die Klebefläche (3) des zweiten Profils (2) aufgebracht wird, dass danach das erste Profil (1) und das zweite Profil (2) gegeneinander gedrückt werden, wobei der Klebstoff (4) die jeweilige Klebefläche (3) des ersten und zweiten Profils (1, 2) in denjenigen Bereichen, in welchen keine Nut (5) ausgebildet ist, vollständig bedeckt und in denjenigen Bereichen, in welchen eine Nut (5) ausgebildet ist, nicht bedeckt.

## Claims

1. Motor vehicle component, in particular sill, comprising a first profile (1) and a second profile (2), wherein the first profile (1) and the second profile (2) each have a bonding surface (3), wherein the first and the second profile (1, 2) are adhesively bonded together at their bonding surfaces (3) by an adhesive (4),
**characterized in that** the bonding surface (3) of the first profile (1) and/or the bonding surface (3) of the second profile (2) has at least one groove (5), wherein the adhesive (4) covers the bonding surface (3) completely in those regions in which a groove (5) has not been formed and does not cover the bonding surface in those regions in which a groove (5) has been formed.

2. Motor vehicle component according to Claim 1,
**characterized in that** the bonding surface (3) of the first profile (1) and/or the bonding surface (3) of the second profile (2) has at least two grooves (5), preferably more than two grooves (5), wherein the adhesive (4) covers the bonding surface (3) completely in those regions in which a groove (5) has not been formed and does not cover the bonding surface in those regions in which a groove (5) has been formed, wherein preferably all the grooves (5) of the first profile (1) and/or all the grooves (5) of the second profile (2) are oriented parallel to one another.

3. Motor vehicle component according to Claim 2,
**characterized in that** the grooves (5) of the first profile (1) are each arranged opposite the grooves (5) of the second profile (2).

4. Motor vehicle component according to at least one of the preceding claims,
**characterized in that** the grooves (5) of the bonding surfaces (3) of the first and/or of the second profile (1, 2) each represent a U-shape of a surface (6) of the profile (1, 2) that forms the respective bonding surface (3), so that, on the side opposite the bonding surface (3), in the region of a groove (5), the surface (6) has in each case an elevation (7) away from the bonding surface (3).

5. Motor vehicle component according to at least one of the preceding claims,
**characterized in that** the first profile (1) and/or the second profile (2) is produced by a continuous production process, in particular by extrusion.

6. Method for producing a motor vehicle component according to at least one of the preceding claims,
**characterized in that** the first profile (1) and the second profile (2) are provided separately from one another, wherein the bonding surface (3) of the first profile (1) and/or the bonding surface (3) of the second profile (2) has at least one groove (5), preferably multiple grooves (5), **in that** adhesive (4) is then applied to the bonding surface (3) of the first profile (1) and/or to the bonding surface (3) of the second profile (2), **in that** the first profile (1) and the second profile (2) are then pressed together, wherein the adhesive (4) covers the bonding surface (3) of the first and second profiles (1, 2) completely in those regions in which a groove (5) has not been formed and does not cover the bonding surface in those regions in which a groove (5) has been formed.

## Revendications

1. Composant de véhicule automobile, en particulier seuil, comprenant un premier profilé (1) et un deuxième profilé (2), le premier profilé (1) et le deuxième profilé (2) comprenant chacun une surface à coller (3), le premier et le deuxième profilé (1, 2) étant collés l'un à l'autre au niveau de leurs surfaces à coller (3) au moyen d'un adhésif (4),
**caractérisé en ce que** la surface à coller (3) du premier profilé (1) et/ou la surface à coller (3) du deuxième profilé (2) présente au moins une rainure (5), l'adhésif (4) recouvrant complètement la surface à coller (3) respective dans les zones dans lesquelles aucune rainure (5) n'est formée, et ne la recouvrant pas dans les zones dans lesquelles une rainure (5) est formée.

2. Composant de véhicule automobile selon la revendication 1,
**caractérisé en ce que** la surface à coller (3) du premier profilé (1) et/ou la surface à coller (3) du deuxième profilé (2) comprend au moins deux rainures (5), de préférence plus de deux rainures (5), l'adhésif (4) recouvrant complètement la surface à coller (3) respective dans les zones dans lesquelles aucune rainure (5) n'est formée et ne la recouvrant pas dans les zones dans lesquelles une rainure (5) est formée, toutes les rainures (5) du premier profilé (1) et/ou toutes les rainures (5) du deuxième profilé (2) étant de préférence alignées parallèlement les unes aux autres.

3. Composant de véhicule automobile selon la revendication 2,
**caractérisé en ce que** les rainures (5) du premier profilé (1) sont agencées en face des rainures (5) respectives du deuxième profilé (2).

4. Composant de véhicule automobile selon au moins l'une des revendications précédentes,
**caractérisé en ce que** les rainures (5) des surfaces à coller (3) du premier et/ou du deuxième profilé (1, 2) présentent chacune une forme en U d'une surface (6) du profilé (1, 2) qui forme la surface à coller (3) respective, de telle sorte que chaque surface (6) présente, sur le côté opposé à la surface à coller (3), dans la zone d'une rainure (5), respectivement une saillie (7) allant en s'éloignant de la surface à coller (3).

5. Composant de véhicule automobile selon au moins l'une des revendications précédentes,
**caractérisé en ce que** le premier profilé (1) et/ou le deuxième profilé (2) est fabriqué par un processus de fabrication en continu, en particulier par extrusion.

6. Procédé de fabrication d'un composant de véhicule automobile selon au moins l'une des revendications précédentes,
**caractérisé en ce que** le premier profilé (1) et le deuxième profilé (2) sont fournis séparément l'un de l'autre, la surface à coller (3) du premier profilé (1) et/ou la surface à coller (3) du deuxième profilé (2) présentant au moins une rainure (5), de préférence plusieurs rainures (5), **en ce qu'**ensuite, de l'adhésif (4) est appliqué sur la surface à coller (3) du premier profilé (1) et/ou sur la surface à coller (3) du deuxième profilé (2), **en ce qu'**ensuite, le premier profilé (1) et le deuxième profilé (2) sont pressés l'un contre l'autre, l'adhésif (4) recouvrant complètement la surface à coller (3) du premier et du deuxième profilé (1, 2) dans les zones dans lesquelles aucune rainure (5) n'est formée et ne recouvrant pas les zones dans lesquelles une rainure (5) est formée.
